# EUROPEAN PATENT SPECIFICATION

(11) **EP 1 514 910 B1**
(45) Date of publication and mention of the grant of the patent: **31.10.2012**
(21) Application number: 04020908.2
(22) Date of filing: 02.09.2004
(51) Int. Cl.: C09D 5/10, B23K 35/22

(54) **Primary anti-corrosive paint composition and steel plate with primary anti-corrosive paint film**
Primäre Antikorrosionsfarbzusammensetzung und Stahlblech mit primärer Antikorrosionsfarbschicht
Composition de peinture primaire anti-corrosive et une tole d'acier sur laquelle est appliquée une couche de peinture primaire anti-corrosive.

(30) Priority: 04.09.2003 JP 2003312923
(43) Date of publication of application: 16.03.2005
(73) Proprietor: CHUGOKU MARINE PAINTS, LTD., Ohtake-shi, Hiroshima (JP)
(72) Inventor: Hata, Masaya, Ohtake-shi Hiroshima (JP); Harada, Osamu, Ohtake-shi Hiroshima (JP); Kondou, Katsumi, Ohtake-shi Hiroshima (JP)
(74) Representative: HOFFMANN EITLE

(56) References cited:
- US-A- 5 246 488
- DATABASE WPI Section Ch, Week 199433 Derwent Publications Ltd., London, GB; Class E37, AN 1994-269638 XP002308431 & JP 06 200188 A (CHUGOKU TORYO KK) 19 July 1994 (1994-07-19)
- DATABASE WPI Section Ch, Week 198535 Derwent Publications Ltd., London, GB; Class A82, AN 1985-214384 XP002308432 & JP 60 137973 A (MITSUI ENG & SHIPBUILDING CO) 22 July 1985 (1985-07-22)
- PATENT ABSTRACTS OF JAPAN vol. 0160, no. 25 (C-0903), 22 January 1992 (1992-01-22) & JP 3 239760 A (NIPPON OIL & FATS CO LTD), 25 October 1991 (1991-10-25)
- DATABASE WPI Section Ch, Week 199935 Derwent Publications Ltd., London, GB; Class G02, AN 1991-144005 XP002308433 & JP 02 922964 B2 (KANSAI PAINT CO LTD) 26 July 1999 (1999-07-26)

## Description

### FIELD OF THE INVENTION

The present invention relates to a primary anti-corrosive paint composition (shop primer) used in the steel material pretreatment that is conducted in the work-out process of steel materials for ships, marine structures, plants, bridges, land tanks, etc. More particularly, the invention relates to a primary anti-corrosive paint composition capable of forming a primary anti-corrosive paint film which can inhibit occurrence of defects such as pits (through-type holes) or blowholes (internal bubbles) even if welding is carried out at a high speed of not less than 100 cm/min and which has excellent anti-corrosion properties, and a steel plate with primary anti-corrosive paint film.

### BACKGROUND OF THE INVENTION

For the purpose of temporarily preventing rusting of large-sized steel structures under construction, such as ships, bridges and plants, surfaces of steels have been conventionally coated with primary anti-corresive paint compositions.

As the primary anti-corrosive paint compositions, organic primary anti-corrosive paint compositions, such as wash primer, non-zinc epoxy primer and epoxy zinc rich primer, and inorganic zinc primary anti-corrosive paint compositions using siloxane type coupling agents are known. Of these primary anti-corrosive paint compositions, the inorganic zinc primary anti-corrosive paint compositions having excellent weldability have been most widely employed.

The inorganic zinc primary anti-corrosive paint compositions have excellent weldability because the amount of a gas generated from the primary anti-corrosive paint film in the welding process is small and occurrence of defects such as pits (through-type holes) or blowholes (internal bubbles) in a weld bead can be inhibited. In recent years, however, further speed-up of welding has been required, and in order to meet this requirement, it is necessary to lower a pressure of a vaporization gas of zinc (melting point: 419°C, boiling point: 930°C), which causes pits or blowholes in the welding process. When zinc dust is exposed to heat of not lower than a melting point of iron, i.e., 1530°C, in the welding process, it rapidly vaporizes to cause occurrence of defects such as pits or blowholes in a weld bead. In order to solve this problem, a method of decreasing the amount of zinc dust contained in the primary anti-corrosive paint composition has been proposed (see, for example, patents documents 1 to 4).

In the method of decreasing the amount of zinc dust, however, anti-corrosion properties are lowered though speed-up of welding becomes feasible.

In recent years, further, demand for enhancement of a welding rate has been increased, and with a lack of hands or shifting to double hull structure of tankers, a welding rate of more than 100 cm/min has been desired. In case of arc welding due to a so-called one-electrode method (single method) wherein welding is carried out by a welding machine having one torch using a conventional primary anti-corrosive paint, if the welding rate exceeds 90 cm/min, a satisfactory leg length (height of weld bead) is not obtained. In case of arc welding due to a two-electrode method (tandem method) wherein welding is carried out by a welding machine having two torches, there is a problem of lowering of anti-corrosion properties, though a satisfactory leg length is obtained even if the welding rate exceeds 100 cm/min.

Accordingly, development of a primary anti-corressive paint composition which does not lower anti-corrosion properties even if welding is carried out at such a high speed as mentioned above and has excellent weldability has been developed.

As compositions to solve the above problems, there have been proposed:
(1) a primary anti-corrosive paint composition mainly containing zinc dust and ferric oxide (see, for example, patent document 5),
(2) a primary anti-corrosive paint composition mainly containing zinc dust, ferric oxide and a molybdenum compound (see, for example, patent document 6), and
(3) a primary anti-corrosive paint composition mainly containing zinc dust and MnO₂, Co₃O₄, Sb₂O₃ or the like as a zinc gas trapping agent (see, for example, patent document 7).

These primary anti-corrosive paint compositions are intended to trap a zinc vaporization gas generated in the welding process by means of chemical reaction without decreasing the amount of the zinc dust.

However, trapping of the zinc vaporization gas by means of chemical reaction has limits, and moreover, there is another problem that an organic additive contained in the primary anti-corrosive paint composition, such as an organic sedimentation inhibiting agent or an organic pigment dispersant, is decomposed by heat of welding to generate a decomposition gas. The organic additive generates a decomposition gas at a low temperature of not higher than 200°C, and therefore, even if it is contained in a small amount in the primary anti-corrosive paint composition, it causes weld defects such as pits or blowholes. To cope with such a problem, it can be thought to decrease the amount of the organic additive. In this case, however, sedimentation is increased in the primary anti-corrosive paint composition, or dispersibility of a pigment is deteriorated.

As a composition to solve the above problem, there has been proposed:
(4) a primary anti-corrosive paint composition mainly containing zinc dust, slag and CaF₂ (see, for example, patent document 8).

The slag contained in this primary anti-corrosive paint composition contains SiO₂, CaO, Al₂O₃, MgO and FeO as main components.

It is described that by the use of the above primary anti-corrosive paint composition, a gas generated in the welding process can be permitted to escape from the welding pool and occurrences of weld defects are decreased. Even by the use of the primary anti-corrosive paint composition using slag of the above components, however, the effect of inhibiting formation of pits or blowholes is not satisfactory.

In Japanese Patent Laid-Open Publication No. 267278/1996 (patent document 9), it is described to use an alkali glass for a flux of a flux wire for weld materials, but there is no description about the use of the alkali glass for the primary anti-corrosive paint composition, and the effect of the alkali glass has not been clarified.

That is to say, the primary anti-corrosive paint film formed from the primary anti-corrosive paint composition containing an alkali metal conventionally has problems that oxidation of a zinc powder is promoted to markedly lower anti-corrosion properties and that because the alkali component is deposited on a surface of the primary anti-corrosive paint film, a paint for final coating does not adhere to the surface of the paint film. However, application of an alkali metal to the primary anti-corrosive paint composition has not been even reviewed.

JP 06 200188 A discloses a rust preventive paint composition comprising zinc powder, a silicon based binder, an organic solvent and at least one of a phosphate-based pigment and an alkali feldspar. The composition is used for coating large constructions such as ships, bridges, etc. to reduce pits and blow holes produced during welding and improve the welding speed.
Patent document 1: Japanese Patent Laid-Open Publication No. 86425/1977
Patent document 2: Japanese Patent Laid-Open Publication No. 51756/1985
Patent document 3: Japanese Patent Laid-Open Publication No. 273272/1987
Patent document 4: Japanese Patent Laid-Open Publication No. 117553/1993
Patent document 5: Japanese Patent Laid-Open Publication No. 60038/1996
Patent document 6: Japanese Patent Laid-Open Publication No. 60039/1996
Patent document 7: Japanese Patent Laid-Open Publication No. 263714/1997
Patent document 8: Japanese Patent Publication No. 17263/1993
Patent document 9: Japanese Patent Laid-Open Publication No. 267278/1997

### OBJECT OF THE INVENTION

The present invention is intended to solve such problems associated with the prior art as described above, and it is an object of the present invention to provide a primary anti-corrosive paint composition capable of forcing a paint film which does not lower anti-corrosion properties and can inhibit occurrence of defects such as pits or blowholes even if welding is carried out at a high speed of not less than 100 cm/min, and a steel plate with primary anti-corrosive paint film wherein a steel plate is coated with the primary anti-corrosive paint composition.

### SUMMARY OF THE INVENTION

The primary anti-corrosive paint composition according to the present invention comprises:
(a) a zinc dust,
(b) an amorphous glass powder containing an alkali metal oxide as a compositional component,
(c) a siloxane type coupling agent,
(d) an organic solvent
   and
(f) an inorganic compound which is decomposed at a temperature of 500 to 1500°C to generate a CO₂ gas or a F₂ gas.

The alkali metal oxide is preferably Na₂O and/or K₂O.

It is preferable that the amorphous glass powder (b) has been surface treated with an acid solution.

In the acid solution, a salt of a divalent or higher metal (divalent or higher metal salt) is preferably further dissolved, and the divalent or higher metal salt is preferably a water-soluble metal salt.

The primary anti-corresive paint composition preferably further comprises (e) titanium oxide. The primary anti-corrosive paint composition also further comprises (f) an inorganic compound which generates a thermal decomposition gas.

The inorganic compound (f) which generates a thermal decomposition gas is an inorganic compound which is decomposed at a temperature of 500 to 1500°C to generate a CO₂ gas or a F₂ gas, and is preferably at least one inorganic compound selected from the group consisting of calcium fluoride, magnesium carbonate, calcium carbonate, barium carbonate, strontium carbonate and zinc carbonate.

The inorganic compound (f) which generates a thermal decomposition gas is also preferably strontium carbonate.

The steel plate with primary anti-corrosive paint film according to the present invention has a paint film made of any one of the above-mentioned primary anti-corrosive paint compositions, said paint film being formed on a surface of a steel plate.

### BRIEF DESCRIPTION OF THE DRAWINGS

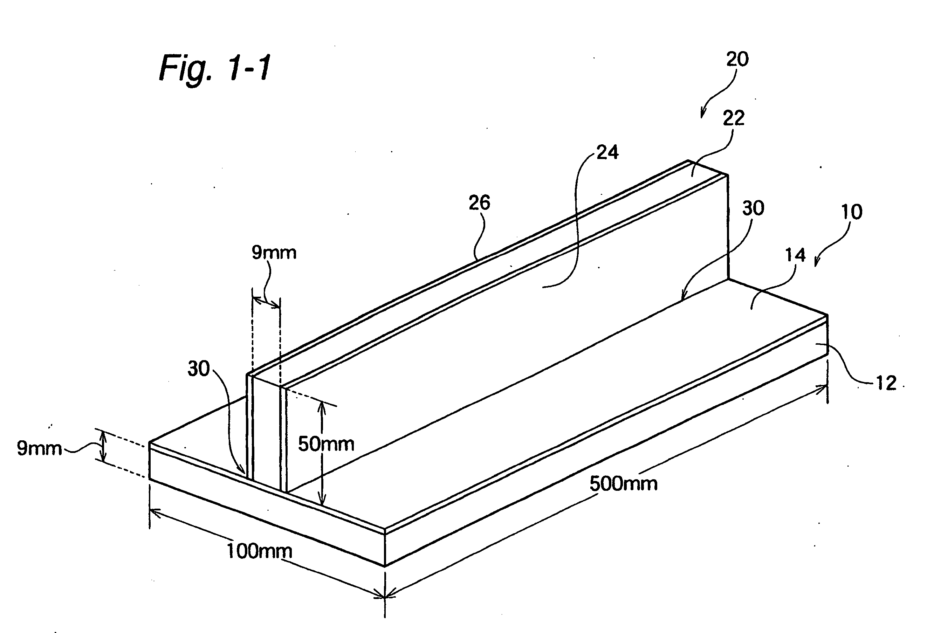

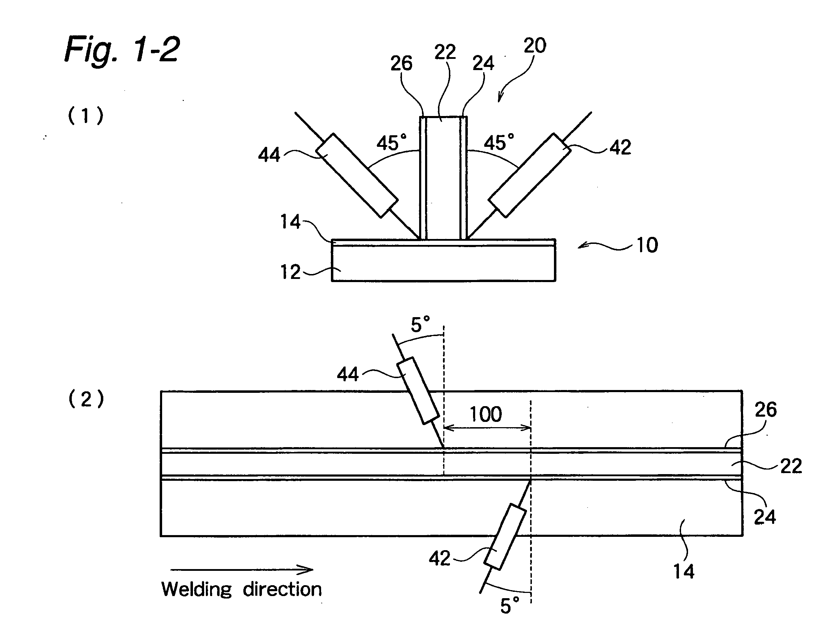

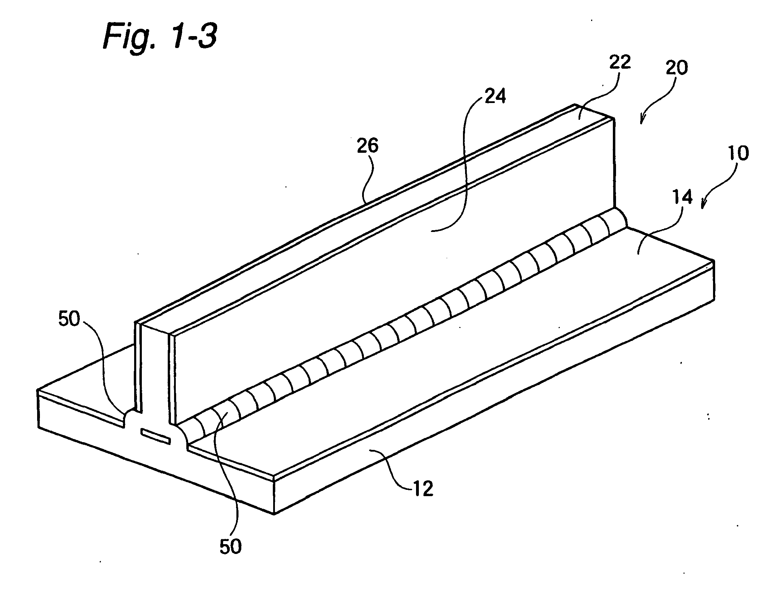

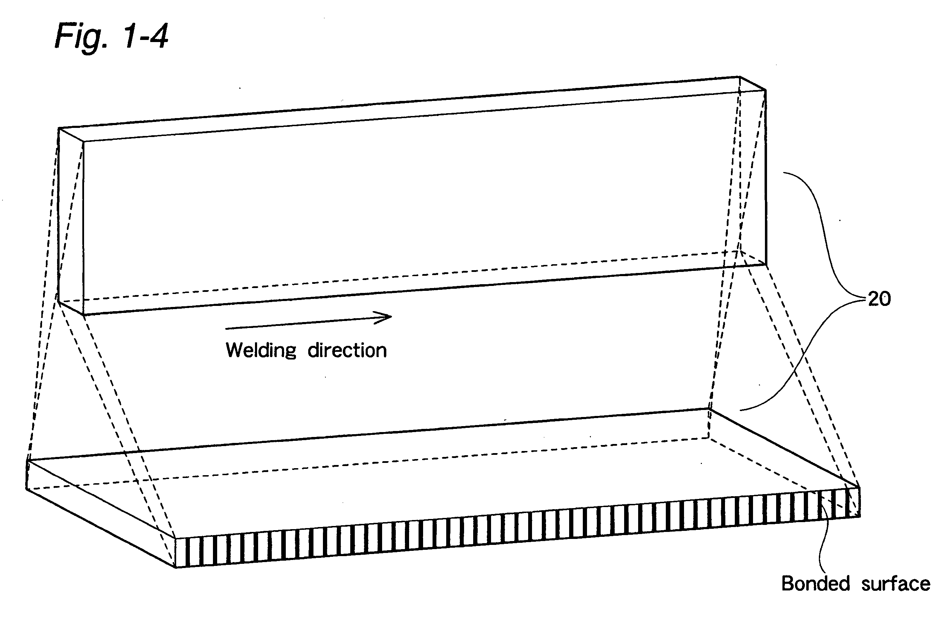

Fig. 1-1 is a schematic view showing a specimen used in a welding test in the examples.
Fig. 1-2(1) is a schematic view showing a welding test in the examples, which is seen from the welding direction, and Fig. 1-2(2) is a schematic view showing a welding test in the examples, which is seen from above.
Fig. 1-3 is a schematic view showing a specimen after welding in the examples.
Fig. 1-4 is a schematic view showing a second steel plate 20 used in a welding test in the examples.

10: first steel plate
12, 22: steel plate
14, 24, 26: paint film
20: second steel plate
30: corner
42: preceding torch
44: succeeding torch
50: weld bead

### DETAILED DESCRIPTION OF THE INVENTION

The primary anti-corrosive paint composition and the steel plate with primary anti-corrosive paint film according to the invention are described in detail hereinafter.

The primary anti-corrosive paint composition of the invention comprises (a) a zinc dust, (b) an amorphous glass powder containing an alkali metal oxide as a compositional component (also referred to as an "amorphous glass powder (b)" simply hereinafter), (c) a siloxane type coupling agent, (d) an organic solvent, and (f) an inorganic compound which is decomposed at a temperature of 500 to 1500°C to generate a CO₂ gas or a F₂ gas, and when needed, the composition further comprises (e) titanium oxide.

These components are described below.

### Zinc dust (a)

In the present invention, the zinc dust (a) is used as an anti-corrosion pigment which is present in the paint film and prevents rusting of a steel plate. As the zinc dust (a), a zinc dust usually used is employed, and preferable is a zinc dust having an average particle diameter of 1 to 15 µm.

### Amorphous glass powder (b)

As the amorphous glass powder (b) in the invention, an amorphous glass powder containing an alkali metal oxide as a compositional component can be employed without any restriction. Examples of the alkali metal oxides include Li₂O, Na₂O, K₂O, Rb₂O and Cs₂O. Of these, Na₂O or K₂O is preferable. These alkali metal oxides are used singly or in combination of two or more kinds.

As the amorphous glass powder (b), an amorphous glass powder containing the above-mentioned alkali metal oxide as a compositional component can be employed without any restriction, but the amorphous glass powder (b) is specifically an amorphous glass powder comprising the above-mentioned alkali metal oxide and at least one compositional component selected from the group consisting of SiO₂, Al₂O₃, Fe₂O₃, CaO, MgO, PbO, B₂O₃, ZnO, Fe₂O₃, CuO, P₂O₅, TiO₂, MnO₂, Li₂O, ZrO₂, Bi₂O₃, SnO₂, Co₃O₄ and the like.

In the amorphous glass powder (b), the alkali metal oxide is desirably contained as a compositional component in an amount of 1 to 20%, preferably 5 to 15%, more preferably 5 to 8%. By the use of the amorphous glass powder (b) containing the alkali metal oxide in the above amount, the resulting primary anti-corrosive paint composition can form a primary anti-corrosive paint film having excellent anti-corrosion properties, and in the welding process, defects such as pits or blowholes are not produced in a weld bead. The amorphous glass powder (b) preferably has an average particle diameter of 1 to 30 µm, and in order to obtain such an average particle diameter, the amorphous glass powder (b) is usually prepared by pulverizing an amorphous glass.

It is thought that the above effect is attributed to the function of the alkali metal oxide melted in the welding process to permit a vaporization gas of zinc or a decomposition gas of an organic additive to effectively escape from the welding pool. In the aforesaid Japanese Patent Publication No. 17263/1993, a primary anti-corrosive paint composition containing slag is described. The slag is an amorphous glass powder containing SiO₂, CaO, Al₂O₃, MgO and FeO as main components, but it cannot be said that the function to permit a vaporization gas of zinc or a decomposition gas of an organic additive to escape from the welding pool is satisfactory, and formation of pits or blowholes in the weld bead is still observed.

The present invention is an invention improved in this point and has been completed by paying attention to the effect of the alkali metal oxide. That is to say, by the use of the amorphous glass powder (b) containing the alkali metal oxide as a compositional component, there is obtained an excellent effect that a vaporization gas of zinc or a decomposition gas of an organic additive generated in the welding process hardly remains in the welding pool and pits or blowholes are not formed in the weld bead.

Although the mechanism to obtain this effect is not clear, it is thought that ionization of the alkali metal contained in the amorphous glass powder (b) is induced by arc plasma of a welding torch in the arc welding to generate stable plasma arc heat, whereby arc (discharge) is stabilized. It is also thought that by the stabilization of arc, the temperature distribution of the melting pool becomes uniform (i.e., stabilized), so that the gas efficiently escapes from the melting pool, and pits or blowholes are not formed in the weld bead.

The amorphous glass powder (b) is not specifically restricted provided that it is a glass powder containing an alkali metal oxide as a compositional component, but the amorphous glass powder (b) is preferably an alkali glass powder. The alkali glass powder is particularly preferably one having composition of 70 to 73% of SiO₂, 0.6 to 2.4% of Al₂O₃, 0.08 to 0.14% of Fe₂O₃, 7 to 12% of CaO, 1.0 to 4.5% of MgO, 11 to 12% of Na₂O and 2.5 to 3% of K₂O, and this alkali glass powder can provide a primary anti-corrosive paint composition capable of forming a paint film of excellent anti-corrosion properties and weldability. The alkali glass powder is a material obtained by pulverizing an alkali glass in such a manner that the average particle diameter becomes 3 to 10 µm.

The amorphous glass powder (b) is prepared by pulverizing an amorphous glass as described above, and therefore, an alkali metal (free alkali) that is not incorporated into the crystalline structure is present on the surfaces of the amorphous glass particles. Because of the presence of the free alkali, oxidation of the zinc dust (a) is promoted in the paint film, and this causes lowering of anti-corrosion properties of the primary anti-corrosive paint film. Accordingly, it is preferable to carry out surface treatment of the pulverized amorphous glass powder with an acid aqueous solution such as hydrochloric acid to remove the free alkali present on the particle surfaces.

The surface treatment can be specifically carried out in the following manner. To 1 liter of ion-exchanged water, 100 to 500 g of a pulverized amorphous glass powder is added. After the addition of the amorphous glass powder, an acid solution is added with stirring until pH of the resulting solution becomes 5 to 8. After the addition, the solution is allowed to stand for 10 to 30 hours, preferably 10 to 20 hours. After the solution is allowed to stand for a given period of time, the resulting solution is filtered to obtain an amorphous glass powder. As the acid solution, hydrochloric acid, sulfuric acid or the like can be employed. Such surface treatment may be carried out once or more.

By carrying out the surface treatment of the amorphous glass powder having the aforesaid average particle diameter with an acid solution as in the present invention, the free alkali present on the particle surfaces can be removed while the alkali metal is left inside the amorphous glass powder. Consequently, the primary anti-corrosive paint composition containing such an amorphous glass powder can form a primary anti-corrosive paint film having excellent anti-corrosion properties, and besides, defects such as pits or blowholes are not produced in the weld bead in the welding process.

In the surface treatment of the amorphous glass powder, it is more preferable to use an acid solution wherein a divalent or higher metal salt is dissolved. The divalent or higher metal salt is preferably a metal salt that is water-soluble and forms a divalent or higher metal ion in water. As the metal salt, chloride or nitrate is preferable. Examples of the chlorides and the nitrates include calcium chloride, calcium nitrate, cobalt nitrate and copper nitrate. Of these, calcium chloride or calcium nitrate is preferably employed. These divalent or higher metal salts are used singly or in combination of two or more kinds. The divalent or higher metal salt is desirably used in an amount of 1 to 40 g, preferably 10 to 20 g, based on 100 g of the amorphous glass powder.

By carrying out the surface treatment with the acid solution wherein a divalent or higher metal salt is dissolved, elution of the alkali metal from the amorphous glass powder can be effectively inhibited. This effect is considered to be attributable to that the divalent or higher metal ion is doped with sodium or potassium eluted, whereby elution of the alkali metal present inside is inhibited.

By the use of the amorphous glass powder having been surface treated with the acid solution, the resulting primary anti-corrosive paint composition is not rapidly cured to gel even after all of the components are mixed. Therefore, the primary anti-corrosive paint composition of the invention has an excellent pot life and can have a stable curing rate.

In the siloxane type coupling agent for use in the invention, an acid, such as hydrochloric acid, zinc chloride or iron chloride, is contained as a polymerization catalyst. Therefore, if an alkali component is present in the primary anti-corrosive paint composition, the acid reacts with the alkali to promote curing of the siloxane type coupling agent. In the amorphous glass powder having been surface treated with the acid solution, however, elution of the alkali metal is inhibited, so that curing of the siloxane type coupling agent is not promoted. In particular, the amorphous glass powder having been surface treated with the acid solution wherein a divalent or higher metal salt is dissolved is preferable because elution of the alkali metal is more effectively inhibited.

### Siloxane type coupling agent (c)

Examples of the siloxane type coupling agents (c) employable in the invention include alkyl silicates, such as tetramethyl orthosilicate, tetraethyl orthosilicate, tetra-n-propyl orthosilicate, tetra-i-propyl orthosilicate, tetra-n-butyl orthosilicate, tetra-sec-butyl orthosilicate, methyl polysilicate and ethyl polysilicate, methyltrialkoxysilanes, such as methyltrimethoxysilane and methyltriethoxysilane, and precondensates thereof. Of these, Ethyl Silicate 40 (available from Nippon Colcote) that is a precondensate of tetraethyl orthosilicate is most preferable, and this compound is used after it is partially hydrolyzed.

### Organic solvent (d)

As the organic solvent (d) for use in the invention, various solvents usually used, such as those of alcohol type, ester type, ketone type, aromatic type and glycol type, are available. Examples of the alcohol type solvents include methanol, ethanol, isopropanol and butanol. Examples of the ester type solvents include ethyl acetate and butyl acetate. Examples of the ketone type solvents include methyl isobutyl ketone (MIBK) and cyclohexanone. Examples of the aromatic type solvents include benzene, xylene and toluene. Examples of the glycol type solvents include propylene glycol monomethyl ether and propylene glycol monomethyl ether acetate (PMAC). These solvents are used singly or in combination of two or more kinds.

### Titanium oxide (e)

In the present invention, the titanium oxide (e) is used as a material effective for fusion of a steel plate. Examples of the titanium oxides (e) include those usually used, which are obtained from titanium minerals such as rutile, ilmenite and rutile flour. These titanium oxides are used singly or in combination or two or more kinds.

### Inorganic compounds (f) which generates thermal decomposition gas

As the inorganic compound (f) which generates a thermal decomposition gas, an inorganic compound which is decomposed at a temperature of 500 to 1500°C to generate a CO₂ gas or a F₂ gas is employed in the invention. Examples of such inorganic compounds include calcium fluoride (fluorite), magnesium carbonate, calcium carbonate, barium carbonate, strontium carbonate and zinc carbonate. In the present invention, it is preferable to use calcium fluoride or strontium carbonate as the inorganic compound (f), and it is particularly preferable to use strontium carbonate. These inorganic compounds (f) are used singly or in combination of two or more kinds.

Because the primary anti-corrosive paint composition of the invention contains the inorganic compound (f) together with the amorphous glass powder (b), a gas generated from the primary anti-corrosive paint film in the welding process can be permitted to efficiently escape from the welding pool, and defects such as pits or blowholes are not produced in the weld bead.

### Other components

To the primary anti-corrosive paint composition of the invention, sedimentation inhibitors of organic bentonite type, polyethylene oxide type, silica fume type, amide type or the like, pigment dispersants, such as high-molecular weight block copolymers and acrylic copolymers, molybdenum trioxide, etc. may be added. Further, components usually used may be added.

The primary anti-corrosive paint composition of the invention comprising the above components is used as a two-component-type composition and is preferably prepared by storing a pigment paste component and a main agent component in separate containers and mixing them immediately before the composition is used. The pigment paste component is prepared by mixing the zinc dust (a), the amorphous glass powder (b), the organic solvent (d), and if desired, the titanium oxide (e) and the inorganic compound (f) which generates a thermal decomposition gas in accordance with a conventional method. On the other hand, the main agent component is prepared by adding hydrochloric acid or the like to a mixed solution of the siloxane type coupling agent (c) and a solvent and stirring them to form a precondensate.

It is also possible that a part or the whole of powder components other than those which react with the siloxane type coupling agent (c), such as the zinc dust (a), are dispersed in the main agent component and the resulting dispersion is mixed with the residual powder components which react with the siloxane type coupling agent (c) immediately before use. From the viewpoint of weldability, it is desirable to remove a substance containing water of crystallization and an organic substance from the primary anti-corrosive paint composition of the invention to the utmost.

### Steel plate with primary anti-corrosive paint film

The steel plate with primary anti-corrosive paint film according to the invention has a paint film made of the primary anti-corrosive paint composition, said film being formed on a surface of a steel plate. The steel plate with primary anti-corrosive paint film can be prepared in accordance with a conventional process. More specifically, a surface of a steel plate is coated with the primary anti-corrosive paint composition of the invention by air spraying or airless spraying, and the paint composition is dried at ordinary temperature.

It is desirable that in the primary anti-corrosive paint film after drying, the zinc dust (a) is contained in an amount of 15 to 60% by weight, preferably 25 to 50% by weight, the amorphous glass powder (b) is contained in an amount of 1 to 20% by weight, preferably 5 to 10% by weight, and the siloxane type coupling agent (c) is contained in an amount of 1 to 20% by weight, preferably 5 to 15% by weight.

Further, as the optionally used components, the titanium oxide (e) is desirably contained in an amount of 10 to 40% by weight, preferably 15 to 25% by weight, and the inorganic compound (f) which generates a thermal decomposition gas is desirably contained in an amount of 1 to 15% by weight, preferably 3 to 10% by weight. By virtue of the above composition, the primary anti-corrosive paint film exerts particularly excellent effect in the anti-corrosion properties and the weldability.

A vaporization gas of zinc or a decomposition gas of an organic additive generated in the welding process from the dried primary anti-corrosive paint film that is formed from the primary anti-corrosive paint composition of the invention hardly remains in the welding pool. On this account, the primary anti-corrosive paint composition of the invention can be applied so thickly as to obtain an average film thickness of 20 to 50 µm. It is also possible to apply the paint composition so as to obtain an average film thickness of 10 to 20 µm as in the case of a usual shop primer.

In contrast, the conventional primary anti-corrosive paint composition is applied so as to obtain an average film thickness of about 15 µm because if the average film thickness of the paint film after drying becomes not less than 20 µm, weld defects come to markedly appear in both of fusion and welding of the steel material processing. Moreover, because the conventional primary anti-corrosive paint composition is applied in a small thickness as described above, the content of zinc in the paint film is decreased by heat of welding, and therefore, the anti-corrosion properties are markedly lowered after welding.

The primary anti-corrosive paint composition of the invention can be applied in such a manner that the average film thickness after drying is in the above range, and moreover, defects such as pits or blowholes are not produced in the weld bead. On this account, enhancement of anti-corrosion properties and enhancement of weldability of the primary anti-corrosive paint film can be attained at the same time. Consequently, the resulting steel plate with primary anti-corrosive paint film can exhibit excellent anti-corrosion properties for a long period of time without impairing weldability.

In addition, even when the primary anti-corrosive paint composition is applied so as to obtain an average film thickness of 15 µm similarly to the conventional primary anti-corrosive paint film, an excellent anti-corrosion effect can be obtained.

### EFFECT OF THE INVENTION

According to the present invention, a primary anti-corrosive paint composition capable of forming a primary anti-corrosive paint film exerting an excellent effect that the film does not lower anti-corrosion properties and inhibits occurrence of defects such as pits or blowholes even if welding is carried out at a high speed can be provided.

Therefore, the primary anti-corrosive paint composition of the invention can be applied in a larger thickness than conventional primary anti-corrosive paint compositions. Hence, the resulting steel plate with primary anti-corrosive paint film exhibits excellent anti-corrosion properties over a long period of time and is not impaired in its weldability in the welding process.

### EXAMPLE

The present invention is further described with reference to the following examples, but it should be construed that the invention is in no way limited to those examples.

### Preparation Example 1

### Preparation of surface treated alkali glass powder

### Surface treated alkali glass powder (I)

First, 250 g of an alkali glass powder (I) (product name: APS-150J, available from Puremic Inc., average particle diameter: 5 µm) was added to 500 g of ion-exchanged water. The resulting aqueous solution had pH of 13. After the addition of the alkali glass powder, 1N hydrochloric acid was added with stirring until pH became 5. After the addition, the solution was allowed to stand for 16 hours to perform surface treatment. Then, the thus treated solution was filtered and allowed to stand at room temperature to dryness. The surface treatment was repeated twice to prepare a surface treated alkali glass powder (I).

### Composition of alkali glass powder (I)

SiO₂: 70 - 73%, Al₂O₃: 0.6 - 2.4%, Fe₂O₃: 0.08 - 0.14%, CaO: 7 - 12%, MgO: 1. 0 - 4.5%, Na₂O: 11 - 12%, K₂O: 2.5 - 3%.

### Surface treated alkali glass powder (II)

First, 250 g of the alkali glass powder (I) prepared above and 25.0 g of calcium chloride were added to 500 g of ion-exchanged water. The resulting aqueous solution had pH of 13. After the addition of the alkali glass powder and calcium chloride, 1N hydrochloric acid was added with stirring until pH became 5. After the addition, the solution was allowed to stand for 3 hours to perform surface treatment. Then, the thus treated solution was filtered and dried in an oven at 125°C. After heat was removed, the alkali glass powder was taken out and added to 500 g of ion-exchanged water. The resulting aqueous solution had pH of 9. After the addition of the alkali glass powder, 1N hydrochloric acid was added with stirring until pH became 7. After the addition, the solution was allowed to stand for 3 hours to perform surface treatment of the second time. Then, the thus treated solution was filtered and allowed to stand at room temperature to dryness. Thus, a surface treated alkali glass powder (II) was prepared.

### Reference Examples 1, 2 and 9, Examples 3-8, 10 and 11 Comparative Examples 1 - 3

### Preparation of pigment paste for primary anti-corrosive paint

Starting materials except a zinc dust were placed in a polyethylene container, then glass beads were added, and they were shaken by a paste shaker for 3 hours. Thereafter, a zinc dust was added, and shaking was further performed for 5 minutes to disperse the pigment. Then, the glass beads were removed by the use of an 80-mesh net to prepare a paste. Compositions of pigment pastes prepared in the examples and the comparative examples are set forth in Table 2.

### Preparation of main agent for primary anti-corrosive paint

In a container, 350 g of ethyl silicate 40 (available from Nippon Colcote), 150 g of ethanol for industrial use, 50 g of deionized water and 0.5 g of 35% hydrochloric acid were placed, and they were maintained at 50°C for 3 hours with stirring. Thereafter, 449.5 g of IPA (isopropyl alcohol) was added to prepare a main agent. This main agent was used in the examples and the comparative examples in common.

### Weldability test

Such a first steel plate 10 having a primary anti-corrosive paint film 14 formed on the whole of one surface of a steel plate 12 and such a second steel plate 20 having primary anti-corrosive paint films 24, 26 formed the whole of both surfaces of a steel plate 22 as shown in Fig. 1-1 were prepared. More specifically, the first steel plate 10 was prepared by coating the whole of one surface of a sandblasted SS400 steel plate 12 having a size of 500 mm x 100 mm x 9 mm with each paint of the examples and the comparative examples in a manner similar to that for an anti-corrosion test specimen so as to obtain a dry film thickness of 30 µm. On the other hand, the second steel plate 20 was prepared by coating the whole of both surfaces of a sandblasted SS400 steel plate 22 having a size of 500 mm x 50 mm x 9 mm with the paint in a manner similar to that for an anti-corrosion test specimen so as to obtain a dry film thickness of 30 µm.

As shown in Figure 1-4, a bonded surface of the second steel plate 20 to the first steel plate 10 was treated by shaper processing, to form mirror surface-treated ditches on the bonded surface(fullback processing treatment).

By this treatment, a gas generated in the welding process could be easily accumulated in the weld bead. Therefore, a weldability test was conducted under a severe condition.

Subsequently, on the center of the surface of the primary anti-corrosive paint film 14 of the first steel plate 10, the second steel plate 20 was stood almost vertically, as shown in Fig. 1-1, and these steel plates were tacked at the prescribed position so that the paint film 14 and the second steel plate 20 adhered to each other. Then, corners 30 formed by the first steel plate 10 and the second steel plate 20 were subjected to horizontal fillet welding.

More specifically, welding was carried out by a twin single method using a tandem welding system (product name: TWS-600L fillet welding test apparatus, manufactured by Takeuchi Kosakusho K.K.). Fig. 1-2(1) is a schematic view showing the welding test seen from the welding direction, and Fig. 1-2(2) is a schematic view showing the welding test seen from above. As shown in Fig. 1-2, a preceding torch 42 and a succeeding torch 44 were used as tandem torches. The welding was carried out under the following welding conditions. A welding rate was 60 cm/min, a torch interval between the preceding torch 42 and the succeeding torch 44 was 100 mm, an angle formed by the second steel plate 20 and the torch (preceding torch 42, succeeding torch 44) was 45°, and an inclination (rear inclination) of the torch (preceding torch 42, succeeding torch 44) to a line perpendicular to the welding direction was 5°. The welding conditions of the tandem method are set forth in Table 1.

Through the welding by the tandem method, such a weld bead 50 as shown in Fig. 1-3 was formed, and the number of pits formed in the weld bead 50 (pit(s)/50cm) and the number of blowholes formed in the weld bead 50 (blowhole(s)/50cm) were evaluated. In the welding process, a first weld bead and a second weld bead were formed at the same time, and the evaluation was conducted on only the second weld bead. The evaluation results are set forth in Table 3

### Anti-corrosion test

### Anti-corrosion properties after ordinary temperature drying

The main agent and the pigment paste were sufficiently mixed in a given mixing ratio to obtain a primary anti-corrosive paint composition. Then, a sandblasted steel plate of 70 mm x 150 mm x 2.3 mm was coated with the primary anti-corrosive paint composition by an air spray so as to obtain a given dry film thickness, and the paint composition was dried for one week in a constant-temperature room of a temperature of 23°C and a relative humidity of 50% in accordance with JIS K5600 1-6 to obtain a specimen. Thereafter, the specimen was placed outdoors and subjected to an exposure test. Then, the specimen was subjected to the following evaluation in accordance with ASTM-D610 to confirm a period of time by which 7 points were reached. The evaluation results are set forth in Table 4

### Evaluation (area of rust on specimen surface)

10 points: not more than 0.01%, 9 points: more than 0.01% and not more than 0.03%, 8 points: more than 0.03% and not more than 0.1%, 7 points: more than 0.1% and not more than 0.3%, 6 points: more than 0.3% and not more than 1.0%, 5 points: more than 1.0% and not more than 3.0%, 4 points: more than 3.0% and not more than 10.0%, 3 points: more than 10.0% and not more than 16.0%, 2 points: more than 16.0% and not more than 33.0%, 1 point: more than 33.0% and not more than 50.0%, 0 point: more than 50.0%

### Anti-corrosion properties after heat treatment

The main agent and the pigment paste were sufficiently mixed in a given mixing ratio to obtain a primary anti-corrosive paint composition. Then, a sandblasted steel plate of 70 mm x 150 mm x 2.3 mm was coated with the primary anti-corrosive paint composition by an air spray so as to obtain a given dry film thickness, and the paint composition was dried for 1 week in a constant-temperature room of a temperature of 23°C and a relative humidity of 50% in accordance with JIS K5600 1-6 and then heated for 3 minutes in a electric furnace of a temperature of 800°C to obtain a specimen. Thereafter, the specimen was placed outdoors and subjected to an exposure test. Then, the specimen was subjected to the above evaluation in accordance with ASTM-D610 to confirm a period of time by which 7 points were reached. The evaluation results are set forth in Table 4.

**Table 1**

| | | Preceding torch | Succeeding torch |
|---|---|---|---|
| Welding rate | | 60 cm/min | |
| Wire *1 | | φ1.2mm | |
| Torch interval | | 100mm | |
| Torch angle | | | |
| | Angle to the second | | |
| | steel plate 20 | 45° | 45° |
| Inclination of torch *2 | | rear inclination of 5° | rear inclination of 5° |
| Wire extension length | | 25mm | 25mm |
| Wire target position | | corner | 1.5 mm-lateral position from corner |
| Current, Voltage | | 280A-32V | 270A-30V |
| Shielding gas | | CO₂ | CO₂ |
| | Feed rate (1/min) | 30 | 30 |

| | | | |
|---|---|---|---|
| *1: DW-100 available from Kobe Steel, Ltd. *2: Inclination of torch to a line perpendicular to the welding direction | | | |

**Table 2**

| | Comp. Ex. 1 | Comp. Ex. 2 | Comp. Ex. 3 | Ref. Ex. 1 | Ref.Ex. 2 | Ex. 3 | Ex. 4 | Ex. 5 | Ex. 6 | Ex. 7 | Ex. 8 | Ref. Ex. 9 | Ex.10 | Ex.11 |
|---|---|---|---|---|---|---|---|---|---|---|---|---|---|---|
| Main agent (part(s) by weight) | 30 | 30 | 30 | 30 | 30 | 30 | 30 | 30 | 30 | 30 | 30 | 30 | 30 | 30 |
| Pigment paste (part(s) by weight) | | | | | | | | | | | | | | |
| Zinc dust | 25 | 25 | 25 | 25 | 25 | 25 | 25 | 25 | 25 | 25 | 25 | 25 | 25 | 25 |
| Ilmenite | 28 | 23 | 23 | 23 | 23 | 19 | 19 | 19 | 19 | 19 | 19 | 23 | 19 | 19 |
| Alkali glass powder (I) (untreated) | | | | 5 | | | | | | | | | | |
| Alkali glass powder (II) (untreated) | | | | | | | | | | | | 5 | 5 | 5 |
| Surface treated alkali glass powder (I) | | | | | 5 | 5 | 5 | 5 | 5 | 5 | | | | |
| Surface treated alkali glass powder (II) | | | | | | | | | | | 5 | | | |
| Neutral glass powder | | 5 | | | | | | | | | | | | |
| Slag | | | 5 | | | | | | | | | | | |
| Fluorite | | | | | | 4 | | | | | | | | |
| Magnesium carbonate | | | | | | | 4 | | | | | | | |
| Calcium carbonate | | | | | | | | 4 | | | | | 4 | |
| Strontium carbonate | | | | | | | | | 4 | | 4 | | | 4 |
| Zinc carbonate | | | | | | | | | | 4 | | | | |
| Organic bentonite | 0.5 | 0.5 | 0.5 | 0.5 | 0.5 | 0.5 | 0.5 | 0.5 | 0.5 | 0.5 | 0.5 | 0.5 | 0.5 | 0.5 |
| Synthetic finely divided silica | 1 | 1 | 1 | 1 | 1 | 1 | 1 | 1 | 1 | 1 | 1 | 1 | 1 | 1 |
| Xylene | 4 | 4 | 4 | 4 | 4 | 4 | 4 | 4 | 4 | 4 | 4 | 4 | 4 | 4 |
| Isopropyl alcohol | 4 | 4 | 4 | 4 | 4 | 4 | 4 | 4 | 4 | 4 | 4 | 4 | 4 | 4 |
| Isobutyl alcohol | 7.5 | 7.5 | 7.5 | 7.5 | 7.5 | 7.5 | 7.5 | 7.5 | 7.5 | 7.5 | 7.5 | 7.5 | 7.5 | 7.5 |
| Total | 100 | 100 | 100 | 100 | 100 | 100 | 100 | 100 | 100 | 100 | 100 | 100 | 100 | 100 |

| | | | | | | | | | | | | | | |
|---|---|---|---|---|---|---|---|---|---|---|---|---|---|---|
| zinc dust (product name: F-2000, available from Honjo Chemical Corp.), ilmenite (product name: Ilmenite Flour #350, available from KINSEI MATEC Co., Ltd.), alkali glass powder (I) (product name: APS-150J, available from Puremic Inc.), alkali glass powder (II) (product name: APS-325, available from Puremic Inc., average particle diameter: 10 µm, the alkali glass powder (II) has the same compositon of the alkali glass powder (I)),organic bentonite (product name: TIXOGEL MPZ, available from Sued-Chemie Catalysts Japan INC.), Synthetic finely divided silica (product name: Aerosil 200, available from Nippon Aerosil Co., Ltd.), Neutral glass powder (product name: Neutral Glass Filler, available from KINSEI MATEC Co., Ltd.), slag (product name: Converter Slag, available from KINSEI MATEC Co., Ltd.) | | | | | | | | | | | | | | |

**Table 3**

| | Comp. Ex. 1 | Comp. Ex. 2 | Comp. Ex. 3 | Ref. Ex. 1 | Ref. Ex. 2 | Ex. 3 | Ex. 4 | Ex. 5 | Ex. 6 | Ex. 7 | Ex. 8 | Ref. Ex. 9 | Ex.10 | Ex.11 |
|---|---|---|---|---|---|---|---|---|---|---|---|---|---|---|
| Main agent | 30 | 30 | 30 | 30 | 30 | 30 | 30 | 30 | 30 | 30 | 30 | 30 | 30 | 30 |
| Pigment paste | 70 | 70 | 70 | 70 | 70 | 70 | 70 | 70 | 70 | 70 | 70 | 70 | 70 | 70 |
| Total (% by unit weight) | 100 | 100 | 100 | 100 | 100 | 100 | 100 | 100 | 100 | 100 | 100 | 100 | 100 | 100 |
| 1. Weldability (dry film thickness: 30 µm) | | | | | | | | | | | | | | |
| (1) Number of pits formed (pit(s)/50cm) | 5 | 6 | 2 | 1 | 2 | 0 | 1 | 1 | 0 | 2 | 0 | 1 | 0 | 0 |
| (2) Number of blowholes formed (blowhole(s)/50cm) | 180 | 163 | 110 | 54 | 75 | 0 | 45 | 25 | 0 | 47 | 0 | 57 | 0 | 0 |

**Table 4**

| | Comp. Ex. 1 | Comp. Ex. 2 | Comp. Ex. 3 | Ref. Ex. 1 | Ref. Ex. 2 | Ex. 3 | Ex. 4 | Ex. 5 | Ex. 6 | Ex. 7 | Ex. 8 | Ref. Ex. 9 | Ex.10 | Ex. 11 |
|---|---|---|---|---|---|---|---|---|---|---|---|---|---|---|
| Main agent | 30 | 30 | 30 | 30 | 30 | 30 | 30 | 30 | 30 | 30 | 30 | 30 | 30 | 30 |
| Pigment paste | 70 | 70 | 70 | 70 | 70 | 70 | 70 | 70 | 70 | 70 | 70 | 70 | 70 | 70 |
| Total (% by unit weight) | 100 | 100 | 100 | 100 | 100 | 100 | 100 | 100 | 100 | 100 | 100 | 100 | 100 | 100 |
| 2. Anti-corrosion properties | | | | | | | | | | | | | | |
| 2-1. Dry film thickness: 15 µm | | | | | | | | | | | | | | |
| (1) Anti-corrosion properties after ordinary temperature drying (month(s)) | 4 | 4 | 4 | 3 | 6 | 6 | 5 | 6 | 6 | 6 | 8 | 4 | 6 | 8 |
| (2) Anti-corrosion properties after heat treatment (month(s)) 2.2 Dry film thickness:30 | 2 | 2 | 2 | 0.5 | 4 | 4 | 3 | 4 | 4 | 4 | 5 | 2 | 4 | 4 |
| 2-2. Dry film thickness: 30 µm (1) Anti-corrosion | | | | | | | | | | | | | | |
| proporties (1) Anti-corrosion properties after ordinary temperature drying (month(s)) | 5 | 6 | 6 | 4 | 9 | 8 | 6 | 9 | 9 | 8 | 10 | 6 | 9 | 10 |
| (2) Anti-corrosion properties after heat treatment (month(s)) | 3 | 3 | 3 | 0.5 | 6 | 5 | 4 | 6 | 6 | 5 | 6 | 3 | 6 | 5 |

## Claims

1. A primary anti-corrosive paint composition comprising:
(a) a zinc dust,
(b) an amorphous glass powder containing an alkali metal oxide as a compositional component,
(c) a siloxane type coupling agent,
(d) an organic solvent, and
(f) an inorganic compound which is decomposed at a temperature of 500 to 1500°C to generate a CO₃ gas or a F₂ gas.

2. The primary anti-corrosive paint composition as claimed in claim 1, wherein the alkali metal oxide is Na₂O and/or K₂O.

3. The primary anti-corrosive paint composition as claimed in claim 1 or 2, wherein the amorphous glass powder (b) has been surface treated with an acid solution.

4. The primary anti-corrosive paint composition as claimed in claim 3, wherein a divalent or higher metal salt is further dissolved in the acid solution.

5. The primary anti-corrosive paint composition as claimed in claim 4, wherein the divalent or higher metal salt is a water-soluble metal salt.

6. The primary anti-corrosive paint composition as claimed in any one of claims 1 to 5, further comprising (e) titanium oxide.

7. The primary anti-corrosive paint composition as claimed in any one of claims 1 to 6, wherein the inorganic compound (f) which generates a thermal decomposition gas is at least one inorganic compound selected from the group consisting of calcium fluoride, magnesium carbonate, calcium carbonate, barium carbonate, strontium carbonate and zinc carbonate.

8. The primary anti-corrosive paint composition as claimed in any one of claims 1 to 6, wherein the inorganic compound (f) which generates a thermal decomposition gas is strontium carbonate.

9. A steel plate with primary anti-corrosive paint film, having a paint film made of the primary anti-corrosive paint composition of any one of claims 1 to 8, said paint film being formed on a surface of a steel plate.

## Patentansprüche

1. Korrosionsschutzgrundlackzusammensetzung, umfassend:
(a) einen Zinkstaub,
(b) ein amorphes Glaspulver, das ein Alkalimetalloxid als Zusammensetzungsbestandteil enthält,
(c) einen siloxanartigen Haftvermittler,
(d) ein organisches Lösungsmittel und
(f) eine anorganische Verbindung, die sich bei einer Temperatur von 500 bis 1500°C zur Erzeugung eines CO₂-Gases oder F₂-Gases zersetzt.

2. Korrosionsschutzgrundlackzusammensetzung gemäß Anspruch 1, worin das Alkalimetalloxid Na₂O und/oder K₂O ist.

3. Korrosionsschutzgrundlackzusammensetzung gemäß Anspruch 1 oder 2, worin das amorphe Glaspulver (b) mit einer Säurelösung oberflächenbehandelt wurde.

4. Korrosionsschutzgrundlackzusammensetzung gemäß Anspruch 3, worin ferner ein 2- oder höherwertiges Metallsalz in der Säurelösung gelöst ist.

5. Korrosionsschutzgrundlackzusammensetzung gemäß Anspruch 4, worin das 2- oder höherwertige Metallsalz ein wasserlösliches Metallsalz ist.

6. Korrosionsschutzgrundlackzusammensetzung gemäß mindestens einem der Ansprüche 1 bis 5, ferner umfassend (e) Titanoxid.

7. Korrosionsschutzgrundlackzusammensetzung gemäß mindestens einem der Ansprüche 1 bis 6, worin die anorganische Verbindung (f), die ein thermisches Zersetzungsgas erzeugt, mindestens eine anorganische Verbindung ist, die aus der Gruppe ausgewählt wird, die aus Calciumfluorid, Magnesiumcarbonat, Calciumcarbonat, Bariumcarbonat, Strontiumcarbonat und Zinkcarbonat besteht.

8. Korrosionsschutzgrundlackzusammensetzung gemäß mindestens einem der Ansprüche 1 bis 6, worin die anorganische Verbindung (f), die ein thermisches Zersetzungsgas erzeugt, Strontiumcarbonat ist.

9. Stahlblech mit einem Korrosionsschutzgrundlackfilm, das einen Lackfilm aus der Korrosionsschutzgrundlackzusammensetzung gemäß mindestens einem der Ansprüche 1 bis 8 aufweist, wobei der Lackfilm auf einer Oberfläche des Stahlblechs gebildet ist.

## Revendications

1. Composition de peinture anticorrosive primaire comprenant :
(a) de la poussière de zinc,
(b) une poudre de verre amorphe contenant un oxyde de métal alcalin en tant que composant de la composition,
(c) un agent de couplage de type siloxane,
(d) un solvant organique, et
(f) un composé inorganique qui est décomposé à une température de 500 à 1 500 °C pour produire un gaz CO₂ ou un gaz F₂.

2. Composition de peinture anticorrosive primaire selon la revendication 1, dans laquelle l'oxyde de métal alcalin est du Na₂O et/ou du K₂O.

3. Composition de peinture anticorrosive primaire selon la revendication 1 ou 2, dans laquelle la poudre de verre amorphe (b) a subi un traitement de surface avec une solution acide.

4. Composition de peinture anticorrosive primaire selon la revendication 3, dans laquelle un sel de métal divalent ou supérieur est en outre dissous dans la solution acide.

5. Composition de peinture anticorrosive primaire selon la revendication 4, dans laquelle le sel de métal divalent ou supérieur est un sel de métal hydrosoluble.

6. Composition de peinture anticorrosive primaire selon l'une quelconque des revendications 1 à 5, comprenant en outre (e) de l'oxyde de titane.

7. Composition de peinture anticorrosive primaire selon l'une quelconque des revendications 1 à 6, dans laquelle le composé inorganique (f) qui produit un gaz de décomposition thermique est au moins un composé inorganique sélectionné à partir du groupe constitué par le fluorure de calcium, le carbonate de magnésium, le carbonate de calcium, le carbonate de baryum, le carbonate de strontium et le carbonate de zinc.

8. Composition de peinture anticorrosive primaire selon l'une quelconque des revendications 1 à 6, dans laquelle le composé inorganique (f) qui produit un gaz de décomposition thermique est du carbonate de strontium.

9. Plaque d'acier avec un film de peinture anticorrosive primaire, ayant un film de peinture fait de la composition de peinture anticorrosive primaire selon l'une quelconque des revendications 1 à 8, ledit film de peinture étant formé sur une surface d'une plaque d'acier.
